# EUROPEAN PATENT APPLICATION

(11) **EP 2 120 437 A1**
(43) Date of publication of application: **18.11.2009**
(21) Application number: 08715182.5
(22) Date of filing: 07.03.2008
(51) Int. Cl.: H04M 3/42

(54) **A METHOD AND SYSTEM OF A GROUP SWITCHBOARD FOR PROCESSING GROUP SWITCHBOARD SHORT MESSAGE**

(30) Priority: 03.04.2007 CN 200710073925
(71) Applicant: Huawei Technologies Co., Ltd., Longgang District, Shenzhen Guangdong 518129 (CN)
(72) Inventor: SUN, Zhihong, Shenzhen Guangdong 518129 (CN); REN, Zhibin, Shenzhen Guangdong 518129 (CN); ZHANG, Yi, Shenzhen Guangdong 518129 (CN)
(74) Representative: Kreuz, Georg Maria
(86) International application number: PCT/CN2008/070446
(87) International publication number: WO 2008/119281

(57) **Abstract**

The present invention discloses a method for processing mobile centrex short messages (SMs), a portal server of a mobile centrex, and a mail server to solve the problem of the low query success rate of mobile centrex SMs in the prior art. The embodiments of the present invention provide a complete processing flow for mobile centrex SMs in non-standard formats, in which mobile centrex SMs in non-standard formats are packaged into mails and sent to a designated mailbox and the mail server notifies SM agents to process the non-standard SMs, thus increasing the success rate of identifying and processing the mobile centrex SMs and improving the degree of group members' satisfaction and recognition of the mobile centrex.

## Description

### Field of the Invention

The present invention relates to mobile communication technologies, and in particular, to a method for processing mobile centrex short messages (SMs), a portal server of a mobile centrex, and a mail server.

### Background of the Invention

A mobile centrex is a virtual group defined for group members, which has a designated number and provides functions such as service consultation, telephone query, and call transfer. Group members may dial the mobile centrex number and dial an extension number directly or by saying the name of the callee according to the voice guide. The mobile centrex automatically transfers the call to the callee, or to mobile centrex agents who provide manual services for callers. Mobile centrex agents are operators of a carrier or manual agents of the group. The mobile centrex may also provide enterprise services, transferring calls to a customer service center (CSC) or providing simple information publishing function for group members.

The mobile centrex also provides the short message service (SMS). Mobile centrex SMs include query SMs that group members send to the mobile centrex and group SMs of group members. Taking the SM query as an example, a group member sends an SM with a given prefix and contents to the mobile centrex. The mobile centrex obtains query results according to the SM contents and generates a Deliver_SM, which is a reply SM to be sent to the calling group member. The SM query function of the mobile centrex directly forwards the SM that is sent by a group member in a given format to the portal server of the mobile centrex through an Internet short message gateway (ISMG). The portal server parses the SM contents according to the SM format, obtains query results and sends an SM carrying the query results to the group member through the ISMG. For another example, a group member sends a group SM to multiple group members. The called number of the group SM is a group short number. The ISMG forwards the SM to the portal server of the mobile centrex according to the group short number. The portal server obtains real numbers of the group members from the database according to the group short number, generates Deliver_SMs that are to be sent to group members, and submits the Deliver_SMs to the ISMG.

In the conventional practicality, group members must send mobile centrex SMs in specified formats. Once the format of a mobile centrex SM is incorrect, the portal may not parse the SM contents and cannot process the SM, leading to a low query success rate of mobile centrex SMs. If definitions of mobile centrex SM formats are added, conditions for the portal server to parse SM contents increase accordingly, reducing the speed of processing mobile centrex SMs.

### Summary of the Invention

Embodiments of the present invention provides a method for processing mobile centrex SMs, a portal server of a mobile centrex, and a mail server to solve the problem of the low processing success rate of mobile centrex SMs in the prior art.

An aspect of the invention the portal server of a mobile centrex includes the following:
a mobile centrex SM receiving unit, adapted to receive mobile centrex SMs that are submitted by calling group members to the mobile centrex, from an ISMG;
a mobile centrex SM format identifying unit, adapted to identify formats of the mobile centrex SMs and output the mobile centrex SMs by types according to identification results;
an SM mail generating unit, adapted to receive mobile centrex SMs in non-standard formats from the mobile centrex SM format identifying unit and package the mobile centrex SMs in non-standard formats into SM mails; and
an SM mail sending unit, adapted to send the SM mails to a mailbox configured for the called mobile centrex, whereupon the mail server of the mailbox notifies SM agents to process the mobile centrex SMs in non-standard formats.

An aspect of the invention the mail server includes the following:
a mail receiving unit, adapted to receive SM mails sent by a portal server of a mobile centrex, where the SM mails are packaged by the portal server according to unidentified non-standard mobile centrex SMs;
an SM agent information storing unit, adapted to store information about agents of the mobile centrex;
a mail allocating unit, adapted to allocate SM mails to SM agents that correspond to SM agent information; and
a mail notifying unit, adapted to send notification mails to clients of the SM agents, where the notification mails are adapted to notify the SM agents to process mobile centrex SMs in non-standard formats.

An aspect of the invention the method for processing mobile centrex SMs includes in a preferred implementation form the following:
receiving, by a portal server of a mobile centrex, mobile centrex SMs submitted by calling group members;
packaging unidentified mobile centrex SMs in non-standard formats into SM mails, and
sending the SM mails to a mailbox configured for the mobile centrex, whereupon the mail server of the mailbox notifies SM agents to process the mobile centrex SMs in non-standard formats.

Embodiments of the present invention provides a complete processing flow for mobile centrex SMs in non-standard formats, in which mobile centrex SMs in non-standard formats are packaged into mails and sent to a designated mailbox and the mail server notifies SM agents to process the mobile centrex SMs in non-standard formats, thus increasing the success rate of identifying and processing mobile centrex SMs and improving the degree of group members' satisfaction and recognition of the mobile centrex.

### Brief Description of the Drawings

FIG. 1 shows a structure of a system according to an embodiment of the present invention;
FIG. 2 shows a flowchart of a method for processing mobile centrex SMs according to an embodiment of the present invention;
FIG. 3 shows a structure of a portal server of a mobile centrex according to an embodiment of the present invention; and
FIG. 4 shows a structure of a mail server according to an embodiment of the present invention.

### Detailed Description of the Invention

Embodiments of the present invention add SM agents to the mobile centrex system to increase the response success rate of mobile centrex SMs. The SM agents complement the automatic processing function of the mobile centrex. When the system cannot identify a mobile centrex SM in a non-standard format, which is sent by a calling group member to a called mobile centrex, the system automatically packages the mobile centrex SM in a non-standard format into an SM mail, and notifies an SM client of the mobile centrex that is used by an SM agent of the SM mail through a mail server. The SM agent logs in to the portal server of the mobile centrex through the SM client, views the contents of the non-standard mobile centrex SM sent by the calling group member through an SM processing page provided by the portal server, and processes the SM manually. The portal server generates a Deliver_SM according to processing instructions of the SM agent and sends the Deliver_SM. The SM mail may also carry the contents of the mobile centrex SM in a non-standard format. If the non-standard short message is a query SM, the SM agent can directly talk with the group member after viewing the SM mail to provide a voice reply to the contents of the mobile centrex SM for the calling group member.

Taking the processing flow of a query SM as an example, the following describes the embodiments of the present invention in detail with reference to the accompanying drawings.

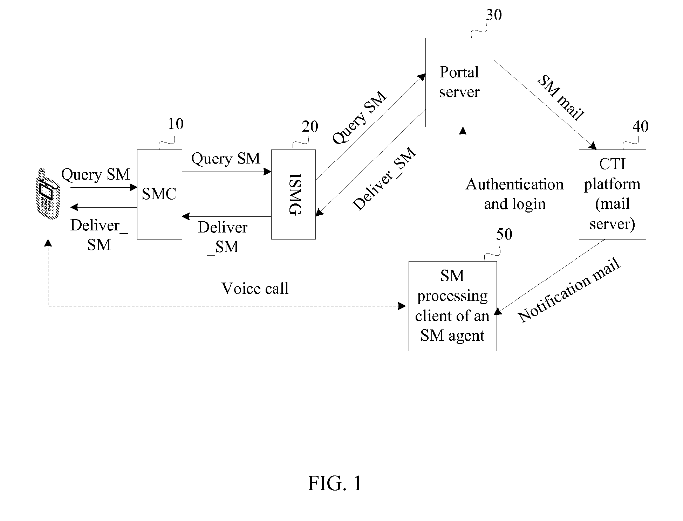

FIG. 1 shows a structure of a system provided according to an embodiment of the present invention. Related network entities may include: a short message center (SMC) 10, an Internet short message gateway (ISMG) 20, a portal server 30 of mobile centrex, a computer telephony integration (CTI) platform 40, and an SM agent client 50.

The SMC 10 and the ISMG 20 are adapted to realize short message communication between group members and the portal server 30.

The portal server 30 is the portal server of a mobile centrex. To realize the SM query function, the portal server 30 stores query results corresponding to each standard query SM. If query SMs that the mobile centrex receives are in identifiable formats, the portal server, according to the stored information, sends Deliver_SMs carrying the query results to the calling group members who send the mobile centrex SMs; if query SMs that the mobile centrex receives are in unidentifiable formats, the portal server, according to the numbers of group members that send the mobile centrex SMs, stores the mobile centrex SMs as unprocessed SMs, packages the SMs into SM mails, and sends the SM mails to a designated mailbox of the mobile centrex. The portal server 30 also provides an SM processing page for SM agents.

The CTI platform 40 includes a mail server. The mail server is connected to the portal server 30; the mail server has mailboxes of each mobile centrex and stores lists of SM agents of each mobile centrex, such as numbers of SM agents; when receiving an SM mail, the mail server allocates an SM agent to the SM mail and notifies the SM agent to process unprocessed non-standard SMs.

The mobile centrex SM processing client 50 is an SM processing client configured for SM agents. The mobile centrex SM processing client is connected to the portal server 30 and the mail server and adapted to receive notification mails from the mail server; when the SM processing client 50 receives a notification mail, an SM agent logs in to the SM processing page provided by the portal server 30 through the SM processing client, and views and processes the unprocessed non-standard mobile centrex SMs through the SM processing page; if the SM mail and the notification mail carry specific SM contents, the SM agent can directly talk with the calling group member to provide voice services for the calling group member.

As seen in FIG. 1, a query SM that is sent by a group member can be processed timely even though it is a non-standard SM.

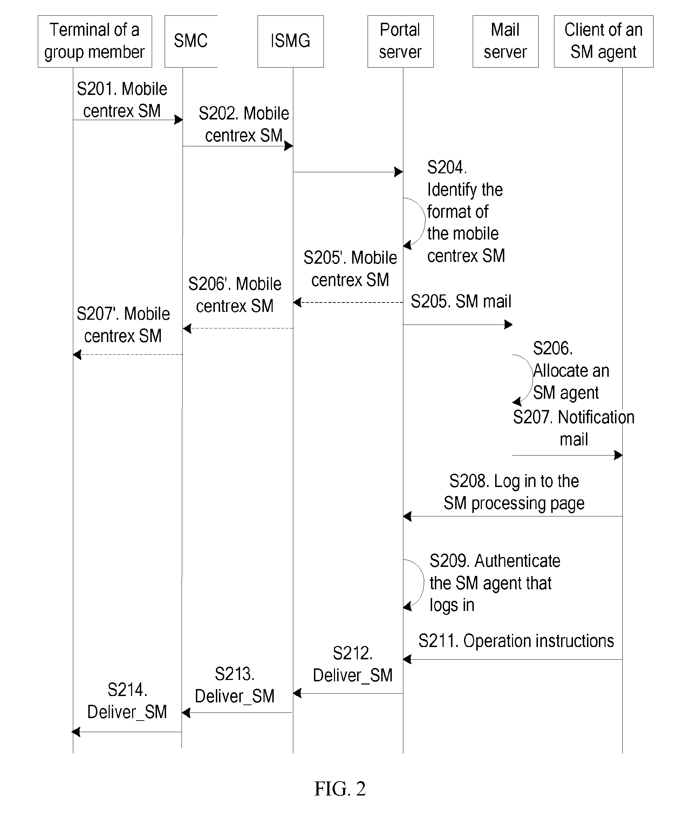

FIG. 2 shows a flowchart of a method for processing mobile centrex SMs in an embodiment of the present invention. The method includes the following steps:
Step 201: A calling group member sends a mobile centrex SM to the called mobile centrex through a terminal.
Step 202: The SMC delivers the mobile centrex SM to the ISMG.
Step 203: The ISMG delivers the mobile centrex SM to the portal server of the called mobile centrex according to the information about the called number.
Step 204: The portal server of the called mobile centrex identifies the format of the mobile centrex SM.

If the format of the mobile centrex SM is identifiable, the portal server performs steps S205 to S207. The portal server finds the query result corresponding to the format of the mobile centrex SM in the database, and generates a Deliver_SM to be sent to the calling group member and submits the Deliver_SM to the ISMG; the ISMG submits the Deliver_SM to the SMC; the SMC sends the Deliver_SM to the calling group member.

If the format of the mobile centrex SM is unidentifiable, the portal server performs steps S205 to S213.
Step 205: The portal server of the mobile centrex packages the contents of the mobile centrex SM in a non-standard format into an SM mail and sends the SM mail to a mailbox designated for the mobile centrex on the mail server. The SM mail carries at least the number of the calling group member of the mobile centrex SM and the number of the called mobile centrex.
Step 206: After receiving the SM mail, the mail server allocates the SM mail to an SM agent that processes the mobile centrex SM according to the number of the mobile centrex carried in the SM mail.

The mail server stores lists of numbers of all SM agents of a mobile centrex that is configured with a mailbox. After receiving an SM mail, the mail server selects the number of an SM agent from the list of numbers of SM agents of the called mobile centrex and notifies the SM agent corresponding to the number to process the mobile centrex SM.
Step 207: The mail server sends a notification mail to the SM processing client of the SM agent. The notification mail carries the number of the called mobile centrex and the number of the calling group member.
Step 208: The SM agent logs in to the SM processing page of the portal server of the mobile centrex through the client login page.
Step 209: The portal server authenticates the SM agent.
Step 210: After passing the authentication, the SM agent is allowed by the portal server to log in to the SM processing page and perform the instructions to view and process the unprocessed mobile centrex SMs.

The SM agent selects an unprocessed mobile centrex SM and processes the SM through the function keys on the SM processing page.
Step 211: The portal server generates a Deliver_SM according to the operation instructions of the SM agent and submits the Deliver_SM to the ISMG.
Steps 212-S213: The ISMG sends the Deliver_SM to the calling group member through the SMC.

In an embodiment of the present invention, SM mails and notification mails may directly carry the contents of the mobile centrex SMs. SM agents view the contents of mobile centrex SMs directly and call the calling group member through a CTI platform to provide voice replies to inquiries of group members, or directly send SMs carrying the query results to group members.

In another embodiment of the present invention, the portal server records the relation between an SM agent that processes SMs for calling group members and a calling group member according to the processing of the unprocessed SMs, searches for the number information of the SM agent corresponding to the number of the calling group member when receiving a mobile centrex SM in a non-standard format, and packages the number information into an SM mail. When identifying the number information carried in the SM mail, the mail server allocates the SM mail to the SM agent corresponding to the number information and sends a notification mail to the SM agent.

Table 1 describes a format of the SM mail when the portal server packages a mobile centrex SM in a non-standard format into an SM mail.

**Table 1**

| Field | Max. Length | Required or Not | Description |
|---|---|---|---|
| groupnum | 24 | Yes | Number of the called mobile centrex |
| usernum | 18 | Yes | Number of the calling group member |
| message | 280 | No | Content of the short message |
| agent id | 4 | No | Number of the agent that processes the SM |

The number of the calling group member and the number of the called mobile centrex may be recorded in extended fields of the mail, and the contents of the short message and the number of the SM agent may be recorded in the contents of the mail. The portal server sends the SM mail to the mailbox configured for the mobile centrex. The mail server parses the contents of the SM mail and determines that the SM mail is a mobile centrex SM forwarded in the form of a mail. If the number of the SM agent in the contents of the SM mail is null, the mail server automatically allocates the mail to an agent in the mobile centrex agent queue. If the number of the SM agent is specified in the contents of the SM mail, the mail server allocates the mail to the specified mobile centrex agent.

The mail server generates a notification mail and sends it to the SM agent. The SM agent receives the notification mail automatically through the mobile centrex SM processing client and logs in to the portal server to process the mobile centrex SM through the mobile centrex SM processing client.

For example, a message processing key is set on the SM processing client. After an SM agent clicks the key, the SM processing client automatically requests an authentication key from the single sign-on (SSO) server and invokes the SM processing page that is provided by the portal server for SM agents. The value of the key is used as the entry URL parameter of the SM processing page. The entry URL parameter should also include the number of the SM agent and the number of the called mobile centrex, and the number of the calling group member. The entry URL parameter is used by the portal server to authenticate SM agents. The name of the entry URL of the SM processing page is as follows:
http://host:port/page?key=w&agentid=x&groupnum=y&usernum=z
where: http://host:port/page is the entry for invoking the portal SM processing page. Table 2 describes the entry URL parameter.

**Table 2**

| Field | Type | Max. Length | Required or Not | Description |
|---|---|---|---|---|
| key | String | 32 | Yes | Key value |
| agentid | String | 4 | Yes | Number of the SM agent |
| groupnum | String | 24 | Yes | Number of the called mobile centrex |
| usernum | String | 24 | No | Number of the calling group member |

The portal server sends the key value to the SSO server for authentication. When the portal server receives the response from the SSO server upon authentication of the key, the SM agent can open the SM processing page provided by the portal server on the client. The SM processing page provides the following functions:

### 1. Listing unprocessed SMs that are stored on the portal server

If the entry URL parameter includes the usernum parameter, the list of unprocessed SMs is displayed according to numbers of group members in the usernum parameter. If the entry URL parameter does not include the usernum parameter, the list of unprocessed SMs of the mobile centrex corresponding to the groupnum parameter is displayed according to numbers of group members. The displayed SM contents include names of group members, numbers of calling group members, unprocessed SMs and their contents, and delivery time and status of unprocessed SMs.

### 2. Providing SM processing operations of SM agents

For example, an SM agent selects an unprocessed query SM on the SM processing page and clicks the query key; the detailed information about the SM is displayed on the page. The SM agent types response information in the response message box on the page according to the SM contents and clicks the send key. The SM is sent to the calling group member through the portal server.

The portal server may also store the relation between the numbers of SM agents and the numbers of group members according to the agentid that is passed in to the SM processing page and the value of the usernum parameter, forming a history session record.

When receiving a non-standard mobile centrex SM from the same group member, the portal server searches for the number of the corresponding SM agent according to the history session record, and adds the number of the SM agent to the SM mail. The mail server notifies the corresponding SM agent to process the SM according to the number of the SM agent. The specific rules include:
1. If the number of a group member in the history session record corresponds to the number of one SM agent, the portal server adds the number of the SM agent to the SM mail;
   If the designated SM agent in the mail cannot process the SM, the mail server may transfer the SM mail to SM agents that can process the SM normally.
2. If the number of a group member in the history session record corresponds to the numbers of multiple SM agents, the portal server allocates the number of the group member to the SM agent that has the most records according to the relation recorded in the history session record. If the number of session records is the same, the portal server allocates the number of the group member to the SM agent that has the earliest or latest session record according to the principle of the earliest or latest processing.

The processing flows of other mobile centrex SMs are the same, and those skilled in the art can make corresponding modifications without departing from the scope of the present invention.

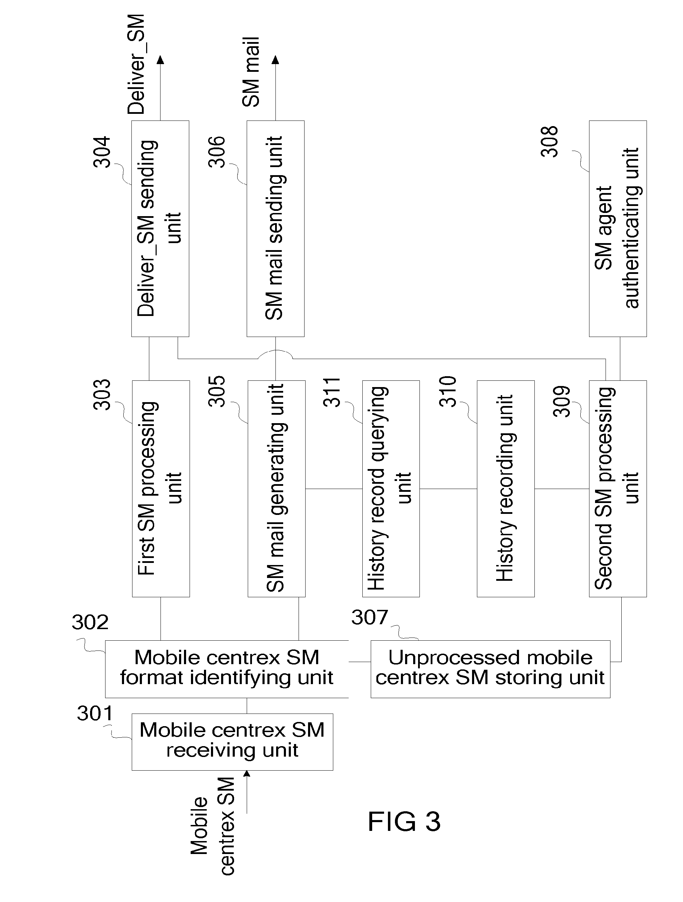

FIG. 3 shows a structure of a portal server of a mobile centrex in an embodiment of the present invention. The portal server includes the following:
a mobile centrex SM receiving unit 301, adapted to receive mobile centrex SMs that are submitted by group members to the mobile centrex, from an ISMG;
a mobile centrex SM format identifying unit 302, adapted to identify formats of the mobile centrex SMs and output the mobile centrex SMs by types according to identification results;
a first SM processing unit 303, adapted to receive standard mobile centrex SMs from the mobile centrex SM format identifying unit and generate Deliver_SMs for the standard mobile centrex SMs;
a Deliver_SM sending unit 304, adapted to send the Deliver_SMs;
an SM mail generating unit 305, adapted to receive mobile centrex SMs in non-standard formats from the mobile centrex SM format identifying unit and package the mobile centrex SMs in non-standard formats into SM mails;
an SM mail sending unit 306, adapted to send the SM mails to a mailbox configured for the called mobile centrex, whereupon the mail server notifies SM agents to process the mobile centrex SMs in non-standard formats;
an unprocessed mobile centrex SM storing unit 307, adapted to receive the mobile centrex SMs in non-standard formats from the mobile centrex SM format identifying unit 302, and store the mobile centrex SMs as unprocessed mobile centrex SMs according to the numbers of the calling group members;
an SM agent authenticating unit 308, adapted to authenticate SM agents that invoke the mobile centrex SM processing page through SM processing clients, and perform operation instructions of the authenticated SM agents to view unprocessed mobile centrex SMs through the SM processing page;
a second SM processing unit 309, adapted to generate Deliver_SMs for the unprocessed mobile centrex SMs according to the SM processing instructions that are input by the SM agents through the SM processing page, and send the Deliver_SMs through the Deliver_SM sending unit 304;
a history recording unit 310, adapted to record the relation between the SM agents that process SMs for the calling group members and the calling group members; and
a history record querying unit 311, adapted to search for SM agents for the calling group members according to the relation after being triggered by the SM mail generating unit 305, which packages the information about the found SM agents into the SM mails.

The mobile centrex SM receiving unit 301 and the Deliver_SM sending unit 304 are communication interfaces between the portal server and the ISMG and may be combined. The SM mail delivery unit 306 is the communication interface between the portal server and the mail server.

Functions of units shown in FIG. 3 may also be implemented through a software program on the portal server. The software program may be stored in a readable storage medium, such as a read-only memory/random access memory (ROM/RAM), a hard disk, and a compact disk.

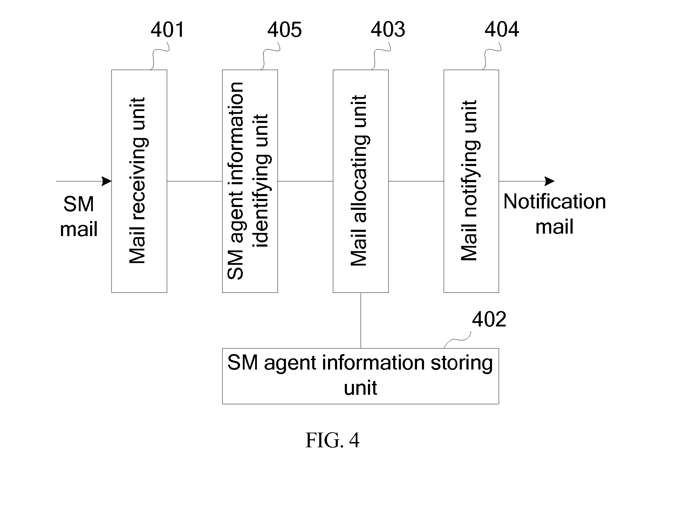

FIG. 4 shows a structure of a mail server in an embodiment of the present invention. The mail server includes the following:
a mail receiving unit 401, adapted to receive SM mails sent by a portal server of a mobile centrex, where the SM mails are packaged by the portal server according to unidentified mobile centrex SMs in non-standard formats and carry at least the number of the mobile centrex that receives the mobile centrex SMs and the number of the calling group member;
an SM agent information storing unit 402, adapted to store information about agent numbers of the mobile centrex;
a mail allocating unit 403, adapted to allocate the SM mails to SM agents that correspond to number information of the SM agents;
a mail notifying unit 404, adapted to send notification mails to clients of the SM agents, where the notification mails are adapted to notify the SM agents to process mobile centrex SMs in non-standard formats; and
an SM agent information identifying unit 405, adapted to identify whether the SM mails carry information about SM agents and notify the mail allocating unit to allocate the SM mails to corresponding SM agents if the SM mails carry information about SM agents.

Functions of units shown in FIG. 4 may also be implemented through one or more software programs on the mail server. The software program may be stored in a readable storage medium, such as a read-only memory/random access memory (ROM/RAM), a hard disk, and a compact disk.

To sum up, the method for processing mobile centrex SMs in embodiments of the present invention includes the following:
receiving, by a portal server of a mobile centrex, mobile centrex SMs sent by calling group members to the mobile centrex;
by the portal server, judging whether formats of the mobile centrex SMs are identifiable, and generating Deliver_SMs and sending the Delivers_SM if the formats are identifiable; and
packaging, by the portal server, unidentifiable mobile centrex SMs in non-standard formats into SM mails; and
sending, by the portal server, the SM mails to a mailbox configured for the mobile centrex, whereupon the mail server of the mailbox notifies SM agents to process the mobile centrex SMs in non-standard formats.

The SM mails and the notification mails may carry the contents of the mobile centrex SMs in non-standard formats; and the SM agents may view and process the non-standard mobile centrex SMs after receiving the non-standard SMs.

Alternatively, the portal server may store the mobile centrex SMs in non-standard formats as unprocessed mobile centrex SMs of the calling group members; and the SM agents may log in to the SM processing page provided by the portal server through SM processing clients configured on terminals, and view and process the mobile centrex SMs in non-standard formats;

Further, the portal server records the numbers of the SM agents who respond to the unprocessed mobile centrex SMs and the numbers of the calling group members of the unprocessed mobile centrex SMs, and searches the recorded information for the numbers of the SM agents corresponding to the numbers of the calling group members of the mobile centrex SMs in non-standard formats after receiving non-standard mobile centrex SMs, and packages the numbers into the SM mails; and the mail server allocates the SM mails to the SM agents corresponding to the numbers when identifying the numbers of the SM agents carried in the SM mails.

The embodiments of the present invention provide a complete SM processing flow through manual processing of mobile centrex SMs in non-standard formats by SM agents, thus increasing the success rate of identifying and processing mobile centrex SMs and improving the degree of group members' satisfaction and recognition of the mobile centrex.

In the embodiments of the present invention, the mail server notifies SM agents through mails. The portal server and the mail server may be both set on the carrier side, not only meeting the requirements of carriers on existing equipment management, but also facilitating networking and maintenance of carriers. The portal server and the mail server may also be deployed on the existing equipment of carriers; thus, no equipment cost is added, and low investment and high return are realized by the increase of SMs and traffic.

The technical solution provided in the embodiments of the present invention solves the problem of incomplete processing of mobile centrex SMs, thus increasing the satisfaction of group members and benefits of value-added services of carriers. The technical solution may be used for mobile centrex services and those skilled in the art may make modifications and variations to the present invention to implement wide application of the present invention in other short message services, achieving complete coverage.

It is apparent that those skilled in the art can make various modifications and variations to the present invention without departing from the scope of the invention. The invention is intended to cover these modifications and variations provided that they fall in the scope of protection defined by the following claims or their equivalents.

Through the foregoing embodiments, it is understandable to those skilled in the art that the embodiments of the present invention may be implemented through software and a necessary general hardware platform or through hardware. However, in most cases, software and a general hardware platform are preferred. Based on such understanding, the technical solution of the present invention or contributions to the prior art may be embodied by software products. The software products are stored in a storage medium and incorporate several instructions to instruct a computer device, for example, a personal computer, a server, or a network device, to execute the method provided by each embodiment of the present invention.

The embodiments described above are exemplary ones of the invention, and are not meant to limit the scope of protection of the invention. It is apparent that those skilled in the art can make various modifications and variations to the invention without departing from the scope of the invention.

## Claims

1. A portal server of a mobile centrex, comprising a mobile centrex SM receiving unit, adapted to receive mobile centrex short messages (SMs) that are submitted by calling group members to the mobile centrex from an Internet short message gateway (ISMG), and further comprising:
a mobile centrex SM format identifying unit, adapted to identify formats of the mobile centrex SMs and output the mobile centrex SMs by types according to identification results;
an SM mail generating unit, adapted to receive mobile centrex SMs in non-standard formats from the mobile centrex SM format identifying unit and package the mobile centrex SMs in non-standard formats into SM mails; and
an SM mail sending unit, adapted to send the SM mails to a mailbox configured for the called mobile centrex, whereupon a mail server of the mailbox notifies SM agents to process the mobile centrex SMs in non-standard formats.

2. The portal server of claim 1, further comprising:
a first SM processing unit, adapted to receive standard mobile centrex SMs from the mobile centrex SM format identifying unit and generate Deliver_SMs according to the standard mobile centrex SMs; and
a Deliver_SM sending unit, adapted to send the Deliver_SMs.

3. The portal server of claim 1 or 2, further comprising:
an unprocessed mobile centrex SM storing unit, adapted to receive non-standard mobile centrex SMs from the mobile centrex SM format identifying unit, and store the mobile centrex SMs as unprocessed mobile centrex SMs according to numbers of the calling group members;
an SM agent authenticating unit, adapted to authenticate SM agents that invoke a mobile centrex SM processing page through SM processing clients, and perform operation instructions of the authenticated SM agents to view unprocessed mobile centrex SMs through the SM processing page; and
a second SM processing unit, adapted to generate Deliver_SMs for the unprocessed mobile centrex SMs according to SM processing instructions that are input by the SM agents through the SM processing page, and send the Deliver_SMs through the Deliver_SM sending unit.

4. The portal server of claim 3, further comprising:
a history recording unit, adapted to record a relation between SM agents that process SMs for the calling group members and the calling group members; and
a history record querying unit, adapted to search for SM agents for the calling group members according to the relation after being triggered by the SM mail generating unit, which packages information about the found SM agents into the SM mails.

5. A mail server, comprising:
a mail receiving unit, adapted to receive short message (SM) mails sent by a portal server of a mobile centrex, wherein the SM mails are packaged by the portal server according to unidentified non-standard mobile centrex SMs;
an SM agent information storing unit, adapted to store information about SM agents of the mobile centrex;
a mail allocating unit, adapted to allocate the SM mails to SM agents that correspond to SM agent information; and
a mail notifying unit, adapted to send notification mails to clients of the SM agents, wherein the notification mails are adapted to notify the SM agents to process mobile centrex SMs in non-standard formats.

6. The mail server of claim 5, further comprising:
an SM agent information identifying unit, adapted to identify the information about SM agents carried in the SM mails and notify the mail allocating unit to allocate the SM mails to corresponding SM agents if the SM mails carry the information about SM agents.

7. A method for processing mobile centrex short messages (SMs), comprising:
receiving, by a portal server of a mobile centrex, mobile centrex SMs submitted by calling group members;
packaging unidentified mobile centrex SMs in non-standard formats into SM mails, and
sending the SM mails to a mailbox configured for the mobile centrex, whereupon a mail server of the mailbox notifies SM agents to process the mobile centrex SMs in non-standard formats.

8. The method of claim 7, wherein if the mobile centrex SMs are in identifiable formats, the method further comprises:
generating and sending, by the portal server, Deliver_SMs for the standard mobile centrex SMs.

9. The method of claim 8, further comprising:
storing, by the portal server, the mobile centrex SMs in non-standard formats as unprocessed SMs of the calling group members;
by the portal server, authenticating SM agents that invoke an SM processing page through SM processing clients, and performing operation instructions of the authenticated SM agents to view unprocessed mobile centrex SMs through the SM processing page; and
generating and sending Deliver_SMs for the unprocessed mobile centrex SMs according to SM processing instructions that are input by the SM agents through the SM processing page.

10. The method of claim 8, further comprising:
recording, by the portal server, a relation between the SM agents that process SMs for the calling group members and the calling group members;
when receiving mobile centrex SMs in non-standard formats, searching for information about the SM agents corresponding to the numbers of the calling group members in the recorded relation, and packaging the SM agent information into the SM mails; and
notifying, by the mail server, corresponding SM agents to process the mobile centrex SMs in non-standard formats when identifying that the SM mails carry the SM agent information.

11. The method of claim 8, 9, and 10, wherein: the mail server notifies the SM agents by generating notification mails and sending the notification mails to the SM processing clients of the SM agents.
